# EUROPÄISCHE PATENTSCHRIFT

(11) **EP 3 208 812 B1**
(45) Veröffentlichungstag und Bekanntmachung des Hinweises auf die Patenterteilung: **17.10.2018**
(21) Anmeldenummer: 17165484.1
(22) Anmeldetag: 15.04.2011
(51) Int. Cl.: H01C 7/12, H01C 1/02, H02H 9/04

(54) **ÜBERSPANNUNGSSCHUTZELEMENT**
ELEMENT PROTECTING AGAINST OVERVOLTAGE
ÉLÉMENT DE PROTECTION CONTRE LES SURTENSIONS

(30) Priorität: 20.04.2010 DE 102010015814
(43) Veröffentlichungstag der Anmeldung: 23.08.2017
(62) Teilanmeldung aus: 11721421.3
(73) Patentinhaber: Phoenix Contact GmbH & Co. KG, 32825 Blomberg (DE)
(72) Erfinder: Depping, Christian, 32657 Lemgo (DE); Grewe, Christina, 32756 Detmold (DE); Wosgien, Joachim, 32584 Löhne (DE); Jungermann, Philip, 32825 Blomberg (DE)
(74) Vertreter: Gesthuysen Patent- und Rechtsanwälte

(56) Entgegenhaltungen:
- EP-A1- 0 016 850
- DE-A1-102007 030 653
- DE-A1-102008 013 447
- DE-T2- 60 112 410
- US-A- 5 721 664

## Beschreibung

Die Erfindung betrifft ein Überspannungsschutzelement mit einem Gehäuse, mit Anschlüssen zum elektrischen Anschluss des Überspannungsschutzelements an den zu schützenden Strom- oder Signalpfad, mit zwei im Inneren des Gehäuses angeordneten und elektrisch parallel geschalteten Varistoren und mit einer zumindest teilweise zwischen den Varistoren angeordneten Mittenelektrode, wobei das Gehäuse zwei aus Metall bestehende, elektrisch miteinander verbundene Gehäusehälften aufweist, wobei die Mittenelektrode gegenüber den Gehäusehälften isoliert ist und mit ihren einander gegenüberliegenden Seiten jeweils elektrisch mit einem ersten Anschlussbereich eines Varistors verbunden ist, und wobei die beiden Varistoren und die Mittenelektrode sandwichartig zwischen den beiden Gehäusehälften angeordnet sind.

Elektrische Stromkreise und Anlagen arbeiten mit der für sie spezifizierten Spannung, der Nennspannung, normalerweise störungsfrei. Das gilt dann nicht, wenn Überspannungen auftreten. Als Überspannungen gelten alle Spannungen, die oberhalb der oberen Toleranzgrenze der Nennspannung liegen. Hierzu zählen vor allem auch die transienten Überspannungen, die aufgrund von atmosphärischen Entladungen, aber auch durch Schalthandlungen oder Kurzschlüsse in Energieversorgungsnetzen auftreten können und galvanisch, induktiv oder kapazitiv in elektrische Stromkreise eingekoppelt werden können. Um nun elektrische oder elektronische Stromkreise, insbesondere elektronische Meß-, Steuer-, Regel- und Schaltkreise, wo auch immer sie eingesetzt sind, gegen transiente Überspannungen zu schützen, sind Überspannungsschutzelemente entwickelt worden und seit vielen Jahren bekannt.

Aufgrund von Alterung und zeitweise auftretenden Überspannungen (TOV) im Sekundenbereich kommt es insbesondere bei Überspannungsschutzelementen mit einem Varistor als Ableiter zu einer unerwünschten Erhöhung des Leckstromes des Varistors bei Betriebsspannungen. Überspannungsschutzelemente mit einem Varistor als Ableiter weisen daher heutzutage häufig eine thermische Abtrennvorrichtung auf, durch die ein nicht mehr einwandfrei funktionsfähiger Varistor elektrisch von dem zu überwachenden Strompfad abgetrennt wird. Bei bekannten Überspannungsschutzelementen erfolgt die Überwachung des Zustandes des Varistors nach dem Prinzip eines Temperaturschalters, wobei bei Überhitzung des Varistors - beispielsweise aufgrund aufgetretener Leckströme - eine zwischen dem Varistor und einem Trennmittel vorgesehene Lötverbindung aufgetrennt wird, was zu einem elektrischen Abtrennen des Varistors führt.

Ein derartiges Überspannungsschutzelement ist beispielsweise aus der DE 695 03 743 T2 bekannt. Bei dem bekannten Überspannungsschutzelement, das zwei parallel zueinander angeordnete Varistoren aufweist, ist die thermische Abtrennvorrichtung zusätzlich noch mit einer optischen Zustandsanzeige verbunden, so dass der Zustand des Überspannungsschutzelements direkt vor Ort anhand der optischen Zustandsanzeige abgelesen werden kann. Als optische Zustandsanzeige weist dieses Überspannungsschutzelement einen im Gehäuse angeordneten ersten Schieber auf, der von Trennzungen betätigt wird, die die Trennmittel bilden, und dabei mit einem zweiten Schieber zusammenwirkt, der in Abhängigkeit von der Position des ersten Schiebers relativ zu einem Sichtfenster verschiebbar ist.

Nachteilig ist bei den bekannten Überspannungsschutzgeräten bzw. den Überspannungsschutzelementen jedoch, daß jeder sich öffnende Kontakt unter Betriebsspannungen größer 30 Volt und hohen Strombelastungen einen Lichtbogen erzeugen kann. Somit kann es beim Auftrennen der Lötverbindung zu einem Lichtbogen zwischen dem Varistor und dem Trennmittel kommen, was zu einer Beschädigung von innerhalb des Überspannungsschutzelements angeordneten Bauteilen oder des Überspannungsschutzelements insgesamt, insbesondere des den Varistor umgebenden Kunststoffgehäuses führen kann. Da derartige Überspannungsschutzelemente bzw. Überspannungsschutzgeräte häufig zu mehreren benachbart zueinander und zu anderen elektronischen Geräten angeordnet sind, kann es aufgrund eines im Inneren des Gehäuses auftretenden Lichtbogens auch zur Zerstörung oder Beschädigung benachbarter Überspannungsschutzgeräte oder anderer elektronischer Geräte kommen.

Aus der DE 601 12 410 T2 ist ein Überspannungsschutzgerät bekannt, das eine in einem Metallgehäuse angeordnete Varistorscheibe (Wafer) aufweist, die mit Hilfe einer kolbenförmigen Elektrode gegen den Boden des topfförmigen Gehäuses verspannt ist. Das Gehäuse wird mit einem Deckel verschlossen, der entweder in das topfförmige Gehäuse eingeschraubt wird oder durch einen Federring bzw. einen Clip, der in einer Nut in der Seitenwand des Gehäuses einrastet, befestigt wird. Dabei ist im Deckel eine Öffnung vorgesehen, durch die der Schaft der Elektrode aus dem Gehäuse zum elektrischen Anschluss der Elektrode herausgeführt ist. Der zweite Anschluss zum elektrischen Anschluss des Überspannungsschutzgeräts an die zu schützenden Strom- oder Signalpfade ist dabei am Gehäuse ausgebildet. Zur elektrischen Isolierung der Elektrode gegenüber dem Gehäuse ist ein Isolationsring vorgesehen, der innerhalb des Gehäuses angeordnet ist und ebenfalls eine Öffnung für den Schaft der Elektrode aufweist. Gemäß einer anderen Ausführung weist das aus der DE 601 12 410 T2 bekannte Überspannungsschutzgerät zwei Varistorscheiben auf, die jeweils mit Hilfe einer kolbenförmigen Elektrode gegen eine Mittelwand des zylindrischen Gehäuses verspannt sind. Zum Anschluss des Gehäuses ist an dem Gehäuse eine Gehäuseelektrodenlasche ausgebildet. Durch die Ausbildung des Gehäuses aus Aluminium wird zwar eine Zerstörung des Gehäuses bei einem am Varistor auftretenden Lichtbogen verhindert, die elektrische Kontaktierung des Varistors sowie dessen Anordnung im Gehäuse und die Anordnung und Ausgestaltung der Elektroden machen den Aufbau und die Montage des bekannten Überspannungsschutzgeräts jedoch relativ aufwendig.

Aus der DE 10 2007 030 653 A1 ist ein eingangs beschriebenes Überspannungsschutzelement bekannt, welches ebenfalls ein aus zwei Gehäusehalbschalen bestehendes Metallgehäuse aufweist. Sowohl bei dem aus der DE 10 2007 030 653 A1 als auch bei dem aus der DE 601 12 410 T2 bekannten Überspannungsschutzelement besteht ein Problem darin, dass die innerhalb des Gehäuses angeordneten Varistorscheiben insbesondere in ihrer Dicke toleranzbehaftet sind, so dass zur Gewährleistung einer sicheren Kontaktierung der Anschlussbereiche der Varistoren bei beiden Überspannungsschutzelementen Federelemente im Gehäuse eingesetzt werden.

Bei dem aus der DE 10 2007 030 653 A1 bekannten Überspannungsschutzelement sind dabei gemäß der bevorzugten Ausführungsform zwei federnde Kontaktelemente jeweils zwischen einer Gehäusehalbschale und dem zugeordneten ersten Anschlussbereich eines Varistors angeordnet. Die elektrische Verbindung zwischen den beiden Gehäusehalbschalen und den beiden Varistoren kann dadurch zwar durch eine rein mechanische Verbindung realisiert werden, so dass Schweiß- oder Lötvorgänge bei der Montage des Überspannungsschutzelements nicht erforderlich sind, in Abhängigkeit von der jeweils tatsächlichen Dicke der beiden Varistoren kommt es jedoch zu unterschiedlichen Kontaktkräften, wodurch die zuverlässige und dauerhafte Funktion des Überspannungsschutzelements unter Umständen beeinträchtigt werden kann. Darüber hinaus hat die Verwendung der federnden Kontaktelemente den Nachteil, dass durch die Impedanz der federnden Kontaktelemente die Impedanz der elektrischen Verbindung mit den Varistoren vergrößert und damit auch der mögliche Schutzpegel erhöht wird. Außerdem wird die Kontaktierungsfläche der Varistoren mit den Gehäusehalbschalen verringert, was die Impedanz der elektrischen Verbindung weiter erhöht.

Die EP 0 016 850 A1 offenbart einen Mehrstreckenableiter für mehrere gemeinsam abzusichernde Leitungen, bei dem für jede Leitung jeweils ein Einzelableiter vorgesehen ist, wobei den Einzelableitern ein gemeinsamer Ableiter in Reihe zugeordnet ist. Dabei sind die ersten Anschlüsse der Einzelableiter über die Metallplatte elektrisch mit einem Anschluss des gemeinsamen Ableiters verbunden, während die zweiten Anschlüsse der Einzelableiter jeweils mit Anschlussstiften verbunden sind, die durch eine Isolator-Endplatte aus dem Gehäuse herausgeführt sind. Der Zweck der aus der EP 0 016 850 A1 bekannten Zusammenschaltung der Einzelableiter mit dem gemeinsamen Ableiter besteht darin, dass nach dem Ansprechen eines Einzelableiters und des in Reihe dazu angeordneten gemeinsamen Ableiters auch die anderen Einzelableiter möglichst schnell ansprechen. Dadurch wird ein gemeinsames Absichern der beteiligten Leitungen bewerkstelligt und ein zuverlässiger Schutz für die angeschlossenen Anlagen garantiert. Der vorliegenden Erfindung liegt daher die Aufgabe zugrunde, ein eingangs beschriebenes Überspannungsschutzelement so weiterzubilden, dass das Überspannungsschutzelement möglichst langlebig ausgebildet sowie möglichst einfach und kostengünstig aufgebaut und montierbar sein.

Diese Aufgabe ist gemäß dem Patentanspruch 1 daudrch gelöst, dass das eingangs beschriebene Überspannungsschutzelement einen weiteren Ableiter, insbesondere einen gasgefüllten Überspannungsableiter auf, der zwischen einem Anschluss des Überspannungsschutzelements und der Parallelschaltung der beiden Varistoren angeordnet ist. Gemäß dieser Lehre der Erfindung sind innerhalb des Gehäuses des Überspannungsschutzelements somit nicht nur die beiden parallel geschalteten Varistoren sondern darüber hinaus auch noch ein zusätzlicher Ableiter, vorzugsweise ein gasgefüllter Überspannungsableiter angeordnet, wobei der zusätzliche Ableiter in Reihe zur Parallelschaltung der beiden Varistoren angeordnet ist.

Bei der grundsätzlich ersten Ausführungsform des Überspannungsschutzelements, bei der die beiden Gehäusehälften jeweils elektrisch mit dem zweiten Anschlussbereich eines Varistors verbunden sind, ist der erste Anschluss des weiteren Ableiters mit dem ersten Anschluss des Überspannungsschutzelements zum Anschluss mindestens eines aktiven Leiters des zu schützenden Strom- oder Signalpfads und der zweite Anschluss des weiteren Ableiters mit der Mittenelektrode elektrisch leitend verbunden. Bei dieser Ausführungsform ist somit der erste Anschluss des Überspannungsschutzelements, an den ein aktiver Leiter des zu schützenden Strom- oder Signalpfads angeschlossen werden kann, mit dem ersten Anschluss des weiteren Ableiters, der zweite Anschluss des weiteren Ableiters mit der Mittenelektrode, die Mittenelektrode mit ihren einander gegenüberliegenden Seiten jeweils elektrisch mit dem ersten Anschlussbereich der beiden Varistoren und die beiden Varistoren mit ihrem zweiten Anschlussbereich mit jeweils einer Gehäusehälfte elektrisch leitend verbunden, wobei das Gehäuse über den zweiten Anschluss mit Bezugspotential verbindbar ist.

Die Anordnung eines weiteren Ableiters, insbesondere eines gasgefüllten Überspannungsableiters, zwischen dem Anschluss des Überspannungsschutzelements für den aktiven Leiter und der Mittenelektrode hat den Vorteil, dass zunächst die charakteristische Zündspannung des weiteren Ableiters überschritten werden muss, bevor eine Überspannung an den Varistoren anliegt. Dies führt dazu, dass die Varistoren nur bei relevanten, die Anlage bzw. den zu schützenden Strom- oder Signalpfad gefährdenden Überspannungen belastet werden. Kleinere Spannungsspitzen, die unterhalb der Zündspannung des weiteren Ableiters liegen, führen somit nicht zu einer Belastung der Varistoren, was zu einer langsameren Alterung und Schädigung der Varistoren führt. Darüber hinaus hat die Anordnung eines weiteren Ableiters den Vorteil, dass das Überspannungsschutzelement auch dann noch eine Überspannungsschutzfunktion aufweist, wenn ein Varistor oder beide Varistoren kurzgeschlossen sind.

Bei der grundsätzlich zweiten Ausführungsform des Überspannungsschutzelements, bei dem die Mittenelektrode mit einem ersten Anschluss zum Anschluss mindestens eines aktiven Leiters des zu schützenden Strom- oder Signalpfads verbunden ist und bei der zwischen den beiden Gehäusehälften und den zugewandten zweiten Anschlussbereichen der beiden Varistoren jeweils ein Verbindungsmetall angeordnet ist, wobei die Verbindungsmetalle jeweils durch ein Isolationselement von den Gehäusehälften isoliert sind, ist der erste Anschluss des weiteren Ableiters mit dem Gehäuse und der zweite Anschluss des weiteren Ableiters mit den beiden Verbindungsmetallen direkt oder indirekt verbunden. Bei dieser Ausführungsform ist somit der erste Anschluss des Überspannungsschutzelements, der mit einem aktiven Leiter verbunden wird, mit der Mittenelektrode, die Mittenelektrode mit ihren einander gegenüberliegenden Seiten jeweils elektrisch mit dem ersten Anschlussbereich der beiden Varistoren, die beiden Varistoren jeweils mit ihrem zweiten Anschlussbereich mit den beiden Verbindungsmetallen, die beiden Verbindungsmetalle jeweils direkt oder indirekt mit dem zweiten Anschluss des weiteren Ableiters und der erste Anschluss des weiteren Ableiters mit dem Gehäuse des Überspannungsschutzelements verbunden, wobei auch hier das Gehäuse über einen zweiten Anschluss mit Bezugspotential verbindbar ist.

Zuvor ist ausgeführt worden, dass der zweite Anschluss des weiteren Ableiters mit den beiden Verbindungsmetallen direkt oder indirekt verbunden ist. Ist der zweite Anschluss des weiteren Ableiters direkt mit den beiden Verbindungsmetallen verbunden, so besteht zwischen dem zweiten Anschluss und den beiden Verbindungsmetallen dauerhaft eine elektrisch leitende Verbindung. Gemäß einer bevorzugten Ausgestaltung dieser Ausführungsform ist der zweite Anschluss des weiteren Ableiters jedoch dadurch (nur) indirekt mit den beiden Verbindungsmetallen verbunden, dass zwischen dem zweiten Anschluss des weiteren Ableiters und den beiden Verbindungsmetallen jeweils eine Vorsicherung, insbesondere eine Schmelzsicherung angeordnet ist. Die Verbindungsmetalle weisen jeweils einen Kontaktabschnitt auf, der mit dem ersten Anschluss der zugeordneten Vorsicherung elektrisch leitend verbunden ist, während die zweiten Anschlüsse der beiden Vorsicherungen mit dem zweiten Anschluss des weiteren Ableiters elektrisch leitend verbunden sind.

Zuvor ist bereits ausgeführt worden, dass das metallische Gehäuse über einen zweiten Anschluss mit Bezugspotential verbindbar ist. Konstruktiv kann der zweite Anschluss dabei gemäß einer Ausführungsform dadurch realisiert sein, dass das Gehäuse einen Befestigungsbereich aufweist, über den das Gehäuse mit einer Montageplatte als Bezugspotential verbindbar ist. Alternativ oder zusätzlich weist das Gehäuse, insbesondere die erste Gehäusehälfte, einen Schutzleiteranschluss als zweiten Anschluss auf, über den (zusätzlich) ein Schutzleiter mit dem Gehäuse elektrisch verbindbar ist.

Der erste Anschluss des Überspannungsschutzelements zum Anschluss mindestens eines aktiven Leiters des zu schützenden Strom- oder Signalpfads kann gemäß einer bevorzugten Ausführungsform von einer Hochstromdurchführungsklemme gebildet sein, die vorzugsweise an einer Stirnseite, insbesondere der Oberseite, der ersten Gehäusehälfte angeordnet ist. Durch die Verwendung einer Hochstromdurchführungsklemme ist eine berührgeschützte Installation der Anschlussleitung bzw. der Anschlussleitungen möglich, wobei das Potential isoliert und hochstromtragfähig in das Gehäuse geführt wird. Durch die Verwendung zusätzlicher Isolierformteile innerhalb des Gehäuses können die Luft- und Kriechstrecken in diesem Bereich weiter erhöht werden.

Alternativ zur Verwendung einer Hochstromdurchführungsklemme kann insbesondere bei der zweiten Ausführungsform des erfindungsgemäßen Überspannungsschutzelements eine mit der Mittenelektrode vorzugsweise einstückig verbundene Anschlusselektrode durch eine isolierende Gehäusedurchführung in das Gehäuseinnere geführt werden.

Gemäß einer weiteren bevorzugten Ausgestaltung des erfindungsgemäßen Überspannungsschutzelements ist eine optische Anzeigeeinrichtung und vorzugsweise zusätzlich auch eine fernübertragbare Anzeigeeinrichtung zur Anzeige des Zustands der Varistoren am Gehäuse ausgebildet bzw. angeordnet. Vorzugsweise weist dabei die Anzeigeeinrichtung eine Leiterplatte auf, auf der sich mehrere LEDs befinden. Darüber hinaus weist die Anzeigeeinrichtung noch mehrere Temperatursicherungen auf, die in thermischem Kontakt mit der Mittenelektrode stehen. Erreicht die Temperatur der Mittenelektrode eine erste vorgegebene Grenztemperatur, so löst die erste Temperatursicherung aus, was dazu führt, dass eine den fehlerfreien Zustand anzeigende, vorzugsweise grüne LED erlischt. Gleichzeitig beginnt eine zweite, vorzugsweise rote LED zu leuchten, wodurch ein Fehlerfall angezeigt wird. Eine vorzugsweise vorgesehene zweite Temperatursicherung kann als fernübertragbare Funktionsanzeige über einen steckbaren Leiterplattenverbinder abfragbar sein. Darüber hinaus kann eine dritte Temperatursicherung vorgesehen sein, die in ihrer Auslösetemperatur auf das Schalten eines Kurzschlussschalters abgestimmt ist, so dass auch das Schalten des Kurzschlussschalters bzw. das Erreichen der Schalttemperatur des Kurzschlussschalters fernübertragbar ist.

Gemäß einer weiteren bevorzugsten Ausführung des Überspannungsschutzelements ist die eine Gehäusehälfte als Deckel ausgebildet, der einen Deckabschnitt und einen zurückspringenden Eingriffsabschnitt aufweist, wobei im verbundenen Zustand der beiden Gehäusehälften der Eingriffsabschnitt in den von der anderen Gehäusehälfte gebildeten korrespondierenden Aufnahmeraum eingreift und der Deckabschnitt den Aufnahmeraum überdeckt. Die beiden Gehäusehälften sind dabei derart ausgebildet und miteinander verbindbar, dass im verbundenen Zustand zwischen den beiden Gehäusehälften eine Sichtfuge vorhanden ist, wobei deren Breite in Abhängigkeit von der Dicke der beiden Varistoren variiert. Die maximale Breite der Sichtfuge ist jedoch stets kleiner als die korrespondierende Erstreckung des Eingriffsabschnitts der als Deckel ausgebildeten zweiten Gehäusehälfte.

Durch die Ausbildung der Sichtfuge zwischen den beiden Gehäusehälften ist auf einfache Art und Weise ein Toleranzausgleich der unterschiedlichen Dicken der verwendeten Varistoren möglich, wobei die Fugenbreite in Abhängigkeit von den Dickentoleranzen variiert. Aufgrund des Konstruktionsprinzips mit einer Sichtfuge sind keine zusätzlichen Elemente, wie die im Stand der Technik verwendeten federnden Kontaktelemente, für den Toleranzausgleich unterschiedlicher Varistoren mit aufgrund des Produktionsprozesses entstehenden unterschiedlichen Dicken notwendig. Der erforderliche Kontaktdruck zwischen den parallel geschalteten Varistoren und der zwischen den beiden Varistoren angeordneten, den ersten Anschlussbereich der beiden Varistoren kontaktierenden Mittenelektrode wird vorzugsweise über ein Verschrauben der beiden Gehäusehälften miteinander, d.h. des Deckels mit der ersten, als Gehäuseschale ausgebildeten Gehäusehälfte realisiert.

Dabei weist die Mittenelektrode vorzugsweise einen flächigen Abschnitt auf, dessen Abmessungen im Wesentlichen den Abmessungen der Varistoren, insbesondere den Abmessungen der ersten Anschlussbereiche der Varistoren entspricht, so dass die Anschlussbereiche der beiden Varistoren jeweils eine Seite der Mittenelektrode flächig kontaktieren können. Dadurch kann eine sehr niederimpedante elektrische Verbindung mit den Varistoren realisiert werden, so dass auch ein niedriger Schutzpegel erreichbar ist.

Gemäß einer weiteren vorteilhaften Ausgestaltung besteht die Mittenelektrode aus zwei parallel zueinander angeordneten und elektrisch miteinander verbundenen Metallteilen, wobei die beiden Metallteile zumindest im Bereich zwischen den beiden Varistoren einen Abstand voneinander aufweisen. In diesem Zwischenraum zwischen den beiden Metallteilen ist vorzugsweise ein Federelement angeordnet, durch das die beiden Metallteile in diesem Bereich auseinandergedrückt und damit mit ihren einander abgewandten Seiten jeweils gegen den ersten Anschlussbereich eines Varistors gedrückt werden.

Diese Ausgestaltung der Mittenelektrode gibt die Möglichkeit, in dem Gehäuse des Überspannungsschutzelements wahlweise Varistoren mit unterschiedlicher Dicke anzuordnen. Da die Nennspannung der Varistoren proportional zur Varistordicke ist, können somit in dem Gehäuse des Überspannungsschutzelements wahlweise unterschiedliche Varistoren mit unterschiedlichen Nennspannungen aufgenommen und kontaktiert werden, ohne das zusätzliche Maßnahmen oder Veränderungen an dem Gehäuse erforderlich sind. Vorzugsweise besteht die Mittenelektrode dabei aus zwei gleichen, abgewinkelten Blechen, die um 180° gedreht zueinander montiert werden. Dadurch können die beiden Metallteile der Mittenelektrode im Bereich außerhalb der Varistoren unmittelbar aufeinander liegen, während sie im Bereich zwischen den beiden Varistoren aufgrund der Abknickung voneinander beabstandet sind.

Gemäß einer letzten Augestaltung der Erfindung ist zusätzlich eine Sicherung mit einem Schmelzleiter innerhalb des Gehäuses angeordnet, die sowohl die Funktion einer Vorsicherung als auch die Funktion eines thermischen Kurzschlussschalters übernimmt. Die mit einem Varistor elektrisch leitend verbundene Sicherung ist dazu so ausgebildet, dass sie sowohl bei Erreichen einer vorgegebenen Grenztemperatur aufgrund einer übermäßigen Erwärmung des Varistors als auch beim Auftreten eines Kurschlusses auslöst und damit den zugeordneten Varistor elektrisch vom Stromkreis abtrennt. Die Sicherung weist dazu vorzugsweise einen Schmelzleiter aus einem niedrig schmelzenden Material, beispielsweise Zinn, auf, so dass die Sicherung - im Unterschied zu herkömmlichen Sicherungen - nicht nur bei einem auftretenden Kurzschlussstrom sondern auch bei einer zu starken Erwärmung auslöst, indem der Schmelzleiter durch den Kurzschlussstrom oder die Erwärmung zerstört wird. Ein innerhalb der Sicherung auftretenden Schaltlichtbogen wird durch geeignete Löschhilfen, beispielsweise Sand, gelöscht.

Im Einzelnen gibt nun eine Vielzahl von Möglichkeiten, das erfindungsgemäße Überspannungsschutzelement auszugestalten und weiterzubilden. Dazu wird verwiesen sowohl auf die dem Patentanspruch 1 nachgeordneten Patentansprüche als auch auf die nachfolgende Beschreibung bevorzugter Ausführungsbeispiele in Verbindung mit der Zeichnung. In der Zeichnung zeigen
- Fig. 1: ein erstes Ausführungsbeispiel eines Überspannungsschutzelements, mit abgenommenem Deckel,
- Fig. 2: eine Explosionsdarstellung des Überspannungsschutzelement gemäß Fig. 1,
- Fig. 3: eine Schnittdarstellung des Überspannungsschutzelements, mit einem Kurzschlussbügel im Normalzustand der Varistoren und im Kurzschlussfall,
- Fig. 4: eine Schnittdarstellung einer Variante des Überspannungsschutzgeräts gemäß Fig. 1,
- Fig. 5: ein zweites Ausführungsbeispiel eines Überspannungsschutzelements, mit abgenommenem Deckel,
- Fig. 6: eine Explosionsdarstellung des Überspannungsschutzelement gemäß Fig. 5 und
- Fig. 7: eine Schnittdarstellung eines Teils des Überspannungsschutzgeräts gemäß Fig. 1.

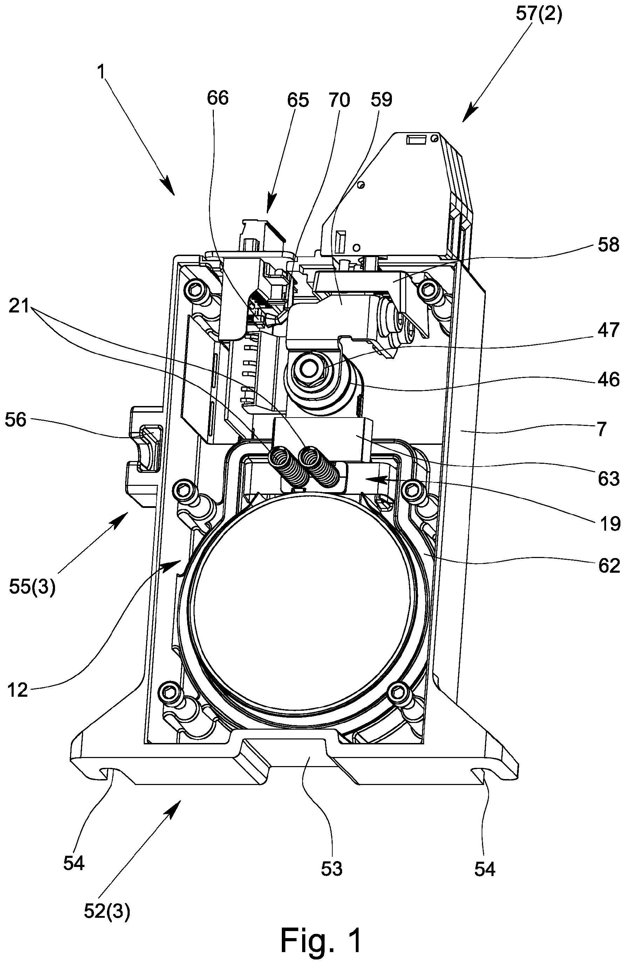

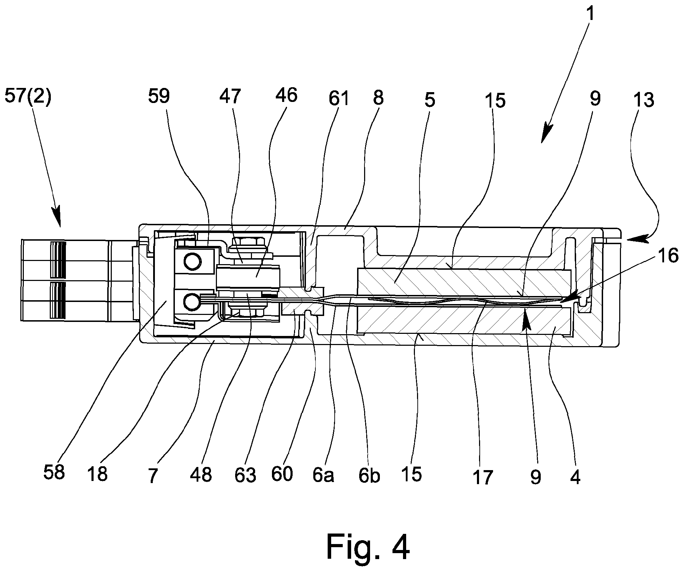

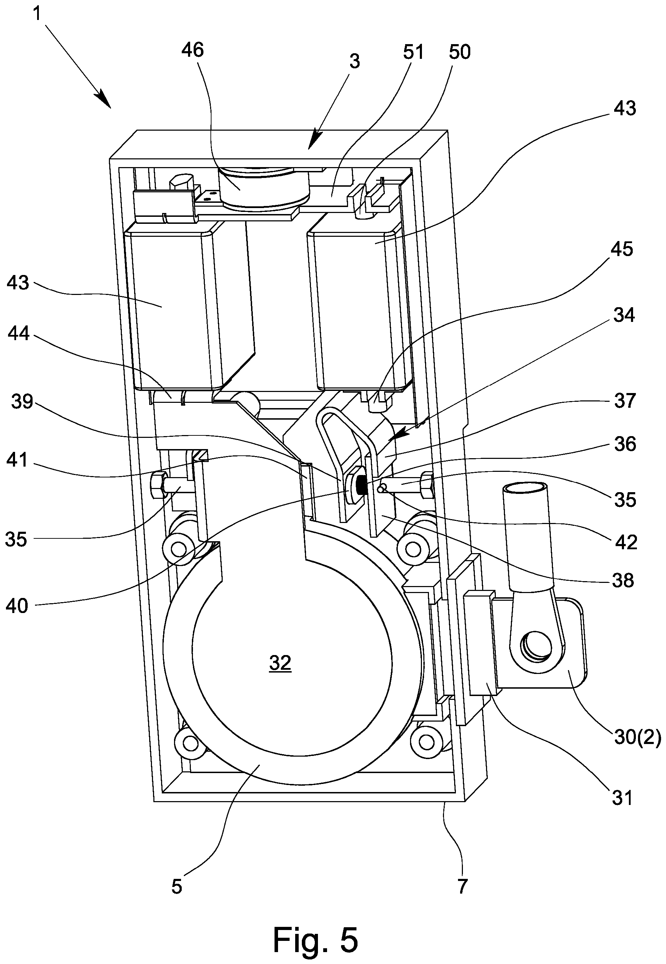

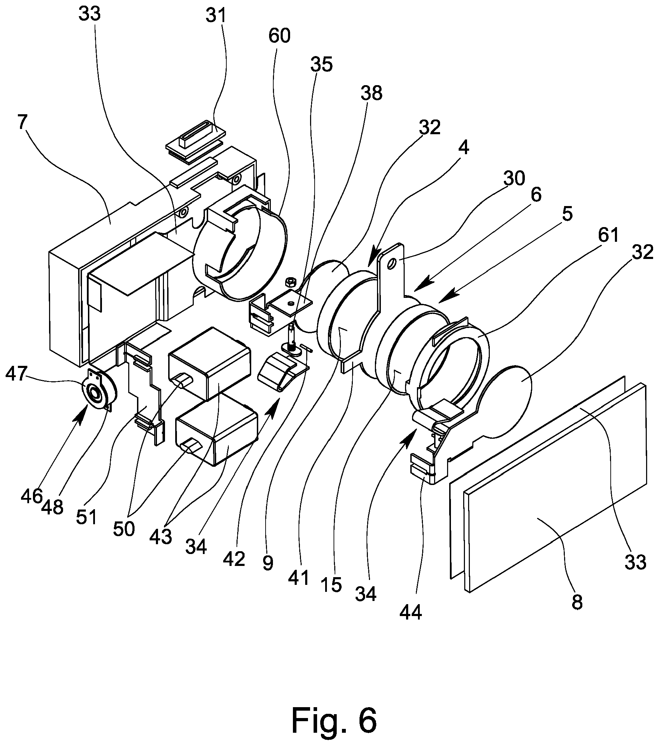

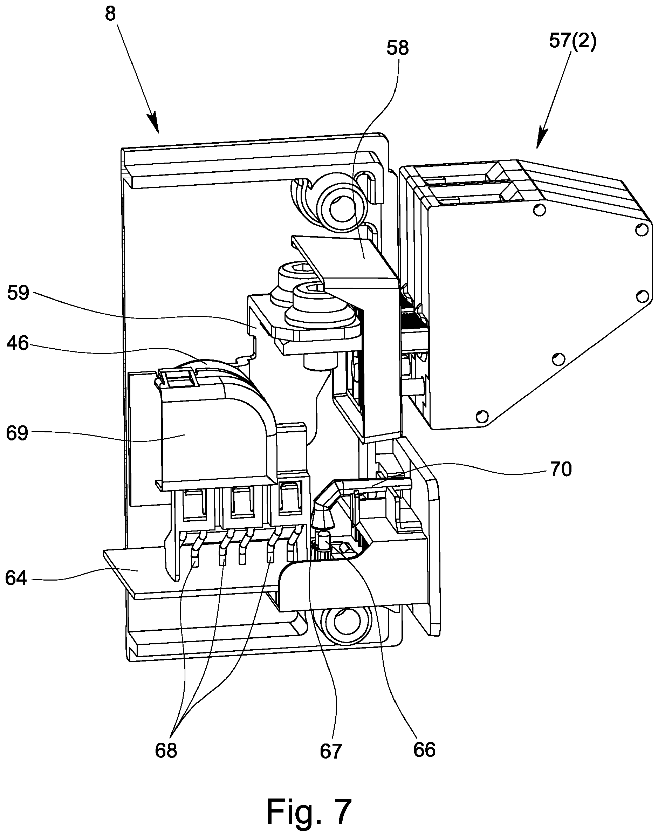

Die Figuren zeigen zwei grundsätzliche Ausführungsformen eines Überspannungsschutzelements 1, wobei eine erste Ausführungsform, insbesondere in den Fig. 1, 2 und 3 und eine zweite Ausführungsform in den Fig. 5 und 6 dargestellt ist. Abweichend von den dargestellten Ausführungsformen müssen nicht alle in dem Gehäuse dargestellten Bauelemente bei dem erfindungsgemäßen Überspannungsschutzelement 1 verwirklicht sein. Darüber hinaus können einzelne bei einer Ausführungsform dargestellte Merkmale auch bei der anderen Ausführungsform realisiert sein. Auch können insbesondere die in den Fig. 4 und 7 dargestellten Merkmale sowohl bei der ersten Ausführungsform als auch bei der zweiten Ausführungsform verwirklicht sein.

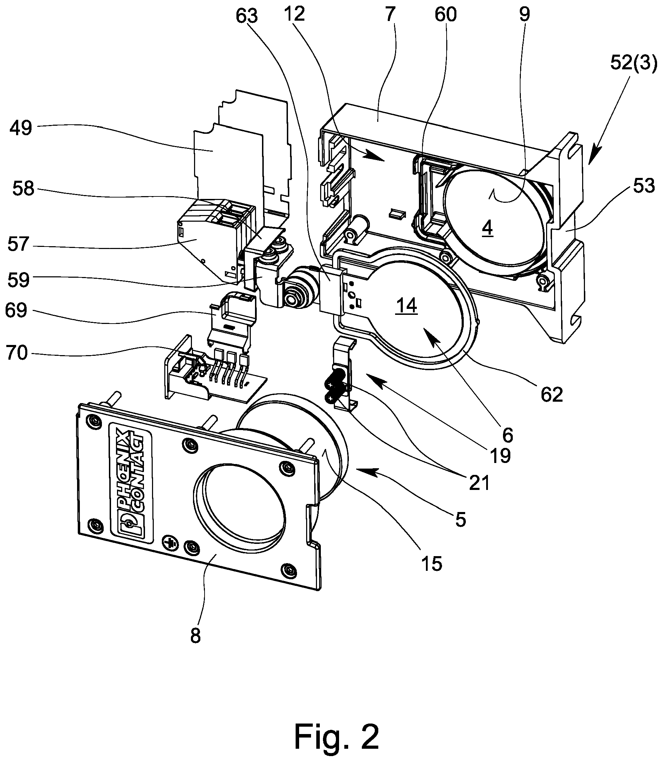

Das in den Figuren dargestellte Überspannungsschutzelement 1 weist ein Gehäuse mit Anschlüssen 2, 3 zum elektrischen Anschluss des Überspannungsschutzelements 1 an einen zu schützenden Strom- oder Signalpfad auf. Im Inneren des Gehäuses sind zwei elektrisch parallel geschaltete Varistoren 4, 5 angeordnet, die jeweils eine kreisförmige Grundfläche aufweisen, wobei der Durchmesser der beiden Varistoren 4, 5 - von toleranzbedingten Abweichungen abgesehen - gleich ist. Zwischen den beiden Varistoren 4, 5 ist eine Mittenelektrode 6 angeordnet, die gegenüber den beiden, das Gehäuse bildenden Gehäusehälften 7, 8 isoliert ist. Die Mittenelektrode 6 ist mit ihren einander gegenüberliegenden Seiten jeweils elektrisch leitend mit einem ersten Anschlussbereich 9 der beiden Varistoren 4, 5 verbunden, wobei die beiden Varistoren 4, 5 und die Mittenelektrode 6, so wie dies insbesondere aus den Fig. 2 und 6 ersichtlich ist, sandwichartig zwischen den beiden Gehäusehälften 7, 8 angeordnet sind.

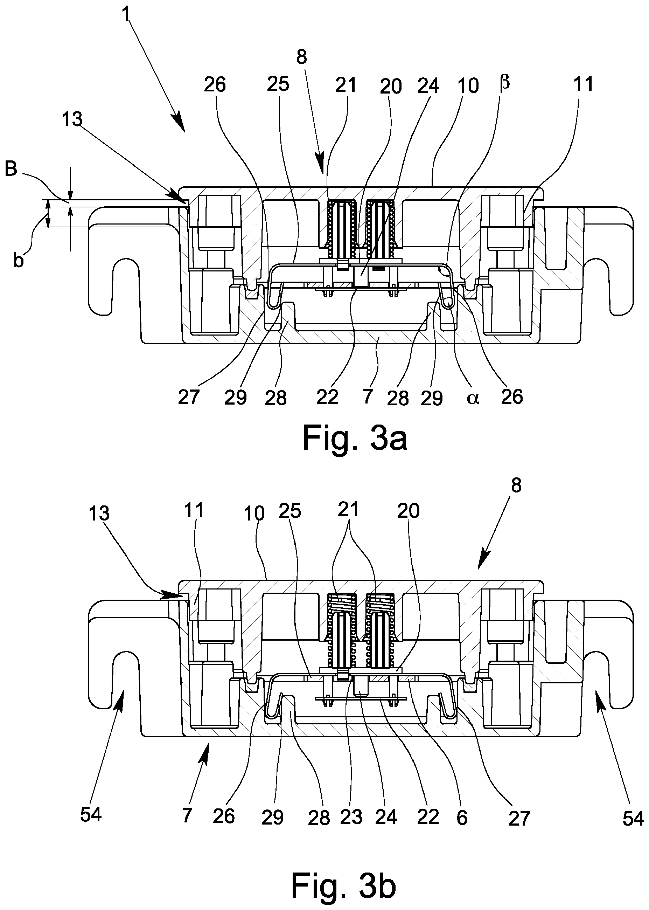

Insbesondere aus den Fig. 2 und 3 ist ersichtlich, dass die beiden Gehäusehälften 7, 8 unterschiedlich ausgebildet sind, wobei die zweite Gehäusehälfte 8 als Deckel ausgebildet ist, der einen Deckabschnitt 10 und einen zurückspringenden Eingriffsabschnitt 11 aufweist. Im verbundenen Zustand der beiden Gehäusehälften 7, 8 (vgl. Fig. 3) greift der Eingriffsabschnitt 11 des Deckels 8 in den von der ersten Gehäusehälfte 7 gebildeten korrespondierenden Aufnahmeraum 12, während der Aufnahmeraum 12 von dem Deckabschnitt 10 überdeckt wird. Aus Fig. 3 ist darüber hinaus erkennbar, dass auch im verbundenen Zustand der beiden Gehäusehälften 7, 8 zwischen den beiden Gehäusehälften 7, 8 eine Sichtfuge 13 vorhanden ist. Die Breite B der Sichtfuge 13 variiert dabei in Abhängigkeit von der Dicke der beiden Varistoren 4, 5. Die beiden Gehäusehälften 7, 8 sind dabei so ausgebildet, dass - jedenfalls bei Verwendung der zulässigen Varistoren 4, 5 - die maximale Breite B der Sichtfuge 13 stets kleiner als die korrespondierende Erstreckung, d. h. die Breite b des Eingriffsabschnitts 11 ist.

Durch die Ausbildung der Sichtfuge 13 kann auf einfache Art und Weise eine herstellungsbedingte Dickentoleranz der Varistoren 4, 5 ausgeglichen werden, ohne dass zusätzliche Elemente für den Toleranzausgleich erforderlich sind. Der erforderliche Kontaktdruck zwischen den beiden Gehäusehälften 7, 8 und den Varistoren 4, 5 bzw. zwisehen den Varistoren 4, 5 und der Mittenelektrode 6 kann einfach durch Verschrauben der beiden Gehäusehälften 7, 8 erreicht werden.

Die Mittenelektrode 6 weist einen flächigen Abschnitt 14 auf, dessen Abmessung bzw. dessen Durchmesser im Wesentlichen dem Durchmesser der Varistoren 4, 5 entspricht, so dass die den beiden Seiten der Mittenelektrode 6 gegenüberliegenden ersten Anschlussbereiche 9 der Varistoren, die mit einer Metallisierung versehen sind, flächig von der Mittenelektrode 6 kontaktiert werden. Bei der Ausführungsform gemäß den Fig. 1 und 2 werden die Varistoren 4, 5 mit ihrem zweiten Anschlussbereich 15 direkt von den beiden Gehäusehälften 7, 8 kontaktiert, so dass beide Anschlussbereiche 9, 15 der beiden Varistoren 4, 5 flächig kontaktiert werden, wodurch ein niederimpedanter Anschluss der Varistoren 4, 5 erreicht wird. Die flächige Verbindung der beiden Varistoren 4, 5 mit den beiden Gehäusehälften 7, 8 führt darüber hinaus dazu, dass eine optimale Wärmeabfuhr von den Varistoren 4, 5 zum Gehäuse gegeben ist, was sich positiv auf die Leistungsfähigkeit und die Lebensdauer der Varistoren 4, 5 auswirkt.

In Fig. 4 ist eine Variante des Überspannungsschutzelements 1 gemäß den Fig. 1 bis 3 dargestellt, bei der die Mittenelektrode 6 aus zwei parallel zueinander angeordneten und elektrisch miteinander verbundenen Metallteilen 6a, 6b besteht. Im Bereich zwischen den beiden Varistoren 4, 5 sind die beiden Metallteile 6a, 6b voneinander beabstandet, wobei in dem so gebildeten Zwischenraum 16 ein Federelement 17, vorzugsweise eine Wellenfeder, angeordnet ist. Durch das Federelement 17 werden die beiden Metallteile 6a, 6b auseinandergedrückt, so dass die beiden Metallteile 6a, 6b mit ihren einander abgewandten Seiten jeweils gegen den ersten Anschlussbereich 9 eines Varistors 4, 5 gedrückt werden und somit die beiden Varistoren 4, 5 kontaktieren. In dem außerhalb der beiden Varistoren 4, 5 angeordneten Bereich sind die beiden Metallteile 6a, 6b dagegen direkt flächig miteinander verbunden, wobei die beiden Metallteile 6a, 6b in diesem Bereich über eine Sicherungsmutter 18 fixiert sind. Die Herstellung der beiden Metallteile 6a, 6b ist dadurch besonders einfach, dass die beiden Metallteile 6a, 6b gleich ausgebildet und abgebogen bzw. abgewinkelt sind und lediglich um 180° gedreht zueinander montiert werden.

Bei den in den Figuren dargestellten Ausführungsbeispielen des erfindungsgemäßen Überspannungsschutzelements 1 ist innerhalb des Gehäuses mindestens ein temperaturabhängiger Kurzschlussschalter angeordnet, so dass bei Erreichen einer vorgegebenen Grenztemperatur T₁ aufgrund einer übermäßigen Erwärmung mindestens eines Varistors 4, 5 entweder beide Varistoren 4, 5 (Ausführungsform 1) oder nur der erwärmte Varistor 4, 5 (Ausführungsform 2) kurzgeschlossen wird. Dadurch wird verhindert, dass aufgrund einer zu starken Erwärmung eines Varistors 4, 5 eine Brandgefahr entsteht, die nicht nur zu einer Zerstörung eines Varistors 4, 5 sondern darüber hinaus auch zur Zerstörung weiterer Bauteile sowie ggf. zu einer Beschädigung benachbarter Geräte oder gar zu einer Gefährdung von Personen führen könnte.

Bei der ersten Ausführungsform gemäß den Fig. 1 bis 3 ist innerhalb des Gehäuses nur ein Kurzschlussschalter vorgesehen, der einen Kurzschlussbügel 19, ein mit dem Kurzschlussbügel 19 mechanisch verbundenes isolierendes Halteelement 20, zwei Federelemente 21 und ein Haltemetall 22 aufweist. Im Normalzustand der Varistoren 4, 5, der in Fig. 3a dargestellt ist, ist der Kurzschlussbügel 19 beabstandet von der Mittelelektrode 6 angeordnet, obwohl das Halteelement 20 von den entgegen ihrer Federkraft zusammengedrückten Federelementen 21 mit einer Federkraft in Richtung auf die Mittenelektrode 6 beaufschlagt ist. Im Normalzustand der Varistoren 4, 5 ist der Kurzschlussbügel 19 nämlich dadurch in der ersten, von der Mittelelektrode 6 beabstandeten Position gehalten, dass sich das Halteelement 20 mit einem durch eine Öffnung 23 in der Mittenelektrode 6 ragenden Abstandselemente 24 am Haltemetall 22 abstützt, welches über eine Lötverbindung mit der Unterseite der Mittenelektrode 6 verbunden ist.

Kommt es zu einer übermäßigen Erwärmung der Varistoren 4, 5, so führt dies auch zu einer Erwärmung der Mittenelektrode 6, wodurch die Lötverbindung zwischen der Mittenelektrode 6 und dem Haltemetall 22 ab einer bestimmten Temperatur von beispielsweise 140 °C aufgetrennt wird. Das Haltemetall 22 bzw. die Lötverbindung kann somit nicht mehr die Gegenkraft zur Federkraft aufbringen. Dadurch wird das Haltemetall 22 aufgrund der Federkraft der Federelemente 21 von dem Abstandselement 24 des Halteelements 20 von der Mittenelektrode 6 weg - nach unten - gedrückt und der von dem Halteelement 20 gehaltene Kurzschlussbügel 19 wird auf die Mittenelektrode 6 gedrückt. In dieser zweiten Position des Halteelements 20 kontaktiert der Kurzschlussbügel 19 sowohl die Mittenelektrode 6 als auch die erste Gehäusehälfte 7, so dass die Varistoren 4, 5 über den Kurzschlussbügel 19 kurzgeschlossen sind (Fig. 3b). Da das Haltemetall 22 über Rastpunkte an den beiden am Halteelement 20 angeordneten Führungsstiften gehalten wird, wird ein Herabfallen des Haltemetalls 22 auch nach dem Auftrennen der Lötverbindung verhindert.

Der Kurzschlussbügel 19 ist im Normalzustand der Varistoren 4, 5 mechanisch unbelastet im Gehäuse angeordnet, nämlich von dem Halteelement 20 aufgenommen. Da der Kurzschlussbügel 19 zum Auftrennen der Lötverbindung zwischen der Mittenelektrode 6 und dem Haltemetall 22 nicht federnd ausgebildet sein muss, kann der Kurzschlussbügel 19 mit seinem Querschnitt und seinem Leitwert auf die elektrischen Anforderungen des Überspannungsschutzelements 1 im Kurzschlussfall optimal abgestimmt werden. Da die Federelemente 21 erst bei der Montage durch das Schließen des Deckels 8 gespannt werden, ist eine einfache und damit kostengünstige Montage der einzelnen Bauteile in der ersten Gehäusehälfte 7 möglich, da alle Bauteile frei von mechanischen Spannungen eingesetzt werden können; zusätzliche Fixierteile sind somit nicht erforderlich.

Wie aus Fig. 3 ersichtlich ist, weist der Kurzschlussbügel 19 einen U-Rücken 25 und zwei U-Schenkel 26 auf, die im Kurzschlussfall an korrespondierenden Kontaktabschnitten 27 des Gehäuseteils 7 anliegen. Benachbart zu den Kontaktabschnitten 27 sind an der Gehäusehälfte 7 Kontaktrippen 28 ausgebildet, die im Kurzschlussfall ebenfalls von den U-Schenkeln 26 des Kurzschlussbügels 19 kontaktiert werden. Hierzu weisen die Enden der U-Schenkel 26 jeweils einen zurückgebogenen Endabschnitt 29 auf, der im Kurzschlussfall jeweils an einer Kontaktrippe 28 anliegt.

Durch die U-förmige Ausgestaltung des Kurzschlussbügels 19 sowie die Ausbildung der zurückgebogenen Endabschnitte 29 der U-Schenkel 26 werden die dynamischen Stromkräfte im Kurzschlussfall zur Verbesserung der Kontakteigenschaften in vorteilhafter Weise ausgenutzt. In den U-Schenkeln 26 und den zurückgebogenen Endabschnitten 29, die zueinander einen Winkel α aufweisen, fließt im Kurzschlussfall ein gegenläufiger Strom, was dazu führt, dass die U-Schenkel 26 und die zurückgebogenen Endabschnitte 29 durch die Stromkräfte auseinander gebogen werden, d.h. der Winkel α vergrößert wird. Dies führt zu einer Vergrößerung der Kontaktkräfte zwischen dem Kurzschlussbügel 19 und dem Gehäuseteil 7 sowohl an den Kontaktabschnitten 27 als auch an den Kontaktrippen 28. Darüber hinaus wird der Kontaktdruck zwischen den U-Schenkeln 26 und den Kontaktabschnitten 27 auch dadurch vergrößert, dass sich der Winkel β zwischen dem U-Rücken 25 und den beiden U-Schenkeln 26 durch die Stromkräfte, die durch den Kurzschlussbügel 19 fließenden Kurzschlussstrom hervorgerufen werden, ebenfalls vergrößert. Insgesamt wird somit durch die bevorzugte Ausgestaltung des Kurzschlussbügels 19 sowie die Ausgestaltung der Gehäusehälfte 7 ein guter Stromübergang zwischen dem Kurzschlussbügel 19 und der Gehäusehälfte 7 erreicht.

Bei der zweiten Ausführungsform gemäß den Fig. 5 und 6 ist beiden Varistoren 4,5 jeweils ein Kurzschlussschalter zugeordnet. Bei dieser Ausführungsform ist die Mittenelektrode 6 mit einer Anschlusselektrode 30 verbunden, die durch eine Gehäusedurchführung 31 isoliert in das Gehäuseinnere geführt ist. Über die Anschlusselektrode 30 kann die Mittenelektrode 6 mit einem aktiven Leiter verbunden werden. Die zweiten Anschlussbereiche 15 der beiden Varistoren 4, 5 sind jeweils von einem Verbindungsmetall 32, welches jeweils auf der der Mittenelektrode 6 abgewandten Seite der Varistoren 4, 5 angeordnet ist, kontaktiert. Zwischen den Gehäusehälften 7, 8 und den Verbindungsmetallen 32 ist jeweils ein Isolationselement 33, das beispielsweise von einer Silikonfolie oder einem Isolierpapier gebildet sein kann, angeordnet, wodurch die beiden Verbindungsmetalle 32 gegenüber den Gehäusehälften 7, 8 isoliert sind.

Die beiden Kurzschlussschalter weisen jeweils einen flexiblen Leiterabschnitt 34, einen Betätigungsstift 35 und ein Federelement 36 auf. Das erste Ende 37 eines flexiblen Leiterabschnitts 34 ist dabei mit einem Kontaktabschnitt 38 eines Verbindungsmetalls 32 und das zweite Ende 39 des flexiblen Leiterabschnitts 34 mit einem Ende 40 des Betätigungsstifts 35 verbunden. Im Normalzustand des zugeordneten Varistors 4,5 (vgl. Fig. 5) ist das zweite Ende 39 des flexiblen Leiterabschnitts 34 beabstandet von einem Kontaktabschnitt 41 der Mittenelektrode 6 angeordnet. Dabei ist das Federelement 36, einen Abschnitt des Betätigungsstifts 35 umschließend, zwischen dem Kontaktabschnitt 38 des Verbindungsmetalls 32 und dem tellerförmigen Ende 40 des Betätigungsstifts 35 angeordnet, wobei das Federelement 36 entgegen seiner Federkraft zusammengedrückt ist. Der Betätigungsstift 35 wird durch ein thermosensitives Element 42 in Form eines Stiftes entgegen der Federkraft des Federelements 36 in dieser ersten Position gehalten.

Kommt es zu einer Erwärmung des Varistors 4, 5, so führt dies ebenfalls zu einer Erwärmung des zugeordneten Verbindungsmetalls 32 sowie des Kontaktabschnitts 38, wodurch auch das thermosensitive Element 42 erwärmt wird, bis es bei Erreichen einer bestimmten Grenztemperatur seine Festigkeit verliert, so dass es die Gegenkraft zur Federkraft des Federelements 36 nicht mehr aufbringen kann. Der Betätigungsstift 35 wird dann durch das Federelement 36 - in der Darstellung gemäß Fig. 3 - nach unten gedrückt und damit das zweite Ende 39 des flexiblen Leiterabschnitts 34 in eine zweite Position verbracht, in der das zweite Ende 39 den Kontaktabschnitt 41 der Mittenelektrode 6 kontaktiert, so dass der Varistor 4, 5, über den flexiblen Leiterabschnitt 34 kurzgeschlossen ist. Der Betätigungsstift 35 ist dabei in einem im Kontaktabschnitt 38 des Verbindungsmetalls 32 ausgebildeten Loch geführt. Als Material für den thermosensitive Stift 42 kann ein Kunststoff oder ein Metall verwendet werden, das bei der vordefinierten Temperatur seine Festigkeit verliert, so dass es zu dem gewollten Kurzschluss des überhitzten Varistors 4, 5 kommt, indem die Mittenelektrode 6 über den flexiblen Leiterabschnitt 34 mit dem Verbindungsmetall 32 elektirsch leitend verbunden wird.

Bei der in den Fig. 5 und 6 dargestellten Ausführungsform des Überspannungsschutzelements 1 ist den beiden Varistoren 4, 5 jeweils noch eine Vorsicherung 43 zugeordnet. Ein entsprechender Kontaktabschnitt 44 der Verbindungsmetalle 32 kontaktiert dabei jeweils einen ersten Anschluss 45 der zugeordneten Vorsicherung 43.

Sowohl bei der in den Fig. 1 und 2 dargestellten Ausführungsform als auch bei der in den Fig. 5 und 6 dargestellten Ausführungsform des Überspannungsschutzelements 1 ist zusätzlich zu den beiden Varistoren 4, 5 noch ein gasgefüllter Überspannungsableiter 46 als weiterer Ableiter im Gehäuse angeordnet. Der gasgefüllte Überspannungsableiter 46 ist dabei in Reihe zur Parallelschaltung der beiden Varistoren 4, 5 angeordnet. Dadurch, dass den parallel geschalteten Varistoren 4, 5 noch ein gasgefüllte Überspannungsableiter 46 in Reihe geschaltet ist, weist das Überspannungsschutzelement 1 auch dann noch eine Überspannungsschutzfunktion auf, wenn ein Varistor oder beide Varistoren 4, 5 kurzgeschlossen sind. Tritt nach dem Kurzschließen der Varistoren 4, 5 eine Überspannung auf, so führt dies zum Zünden des gasgefüllten Überspannungsableiters 46, so dass ein Gerät oder eine Anlage, zu dessen Schutz das Überspannungsschutzelement 1 eingesetzt ist, durch die Überspannung nicht beschädigt wird.

Bei dem Ausführungsbeispiel gemäß den Fig. 1 und 2 ist der erste Anschluss 47 des gasgefüllten Überspannungsableiters 46 mit dem ersten Anschluss 2 des Überspannungsschutzelements 1 zum Anschluss eines aktiven Leiters und der zweite Anschluss 48 mit der Mittenelektrode 6 elektrisch leitend verbunden. Im Bereich des gasgefüllten Überspannungsableiters 46 ist dabei eine zusätzliche Isolation 49 innerhalb des Gehäuses angeordnet, die zumindest den weiteren Überspannungsableiter 46 und den Verbindungsbereich des ersten Anschlusses 47 des Überspannungsableiter 46 mit einem ersten Anschluss 2 des Überspannungsschutzelements 1 gegenüber dem Gehäuse zusätzlich isoliert. Hierdurch werden die Luft- und Kriechstrecken vergrößert, so dass die Montage des gasgefüllten Überspannungsableiters 46 in einem reduzierten Bauraum erfolge kann.

Bei dem Ausführungsbeispiel gemäß den Fig. 5 und 6 ist der erste Anschluss 47 des gasgefüllten Überspannungsableiters 46 dagegen mit dem Gehäuse, genau genommen mit der Gehäusehälfte 7, und der zweite Anschluss 48 über die beiden Vorsicherungen 43 mit den beiden Verbindungsmetallen 32 verbunden. Damit die beiden Vorsicherungen 43 parallel mit dem zweiten Anschluss 48 des gasgefüllten Überspannungsableiters 46 elektrisch verbunden werden können, ist zwischen dem zweiten Anschluss 48 des gasgefüllten Überspannungsableiters 46 und den zweiten Anschlüssen 50 der Vorsicherungen 43 ein Kontaktmetall 51 angeordnet.

Bei einer - hier nicht dargestellten - Variante der Ausführung gemäß den Fig. 5 und 6 sind die beiden thermischen Kurzschlussschalter und die beiden Vorsicherungen 43 durch jeweils eine Sicherung mit einem Schmelzleiter ersetzt. Die beiden Sicherung sind dann jeweils einerseits über ein Verbindungsmetall 32 mit einem Varistor 4, 5 und andererseits über das Kontaktmetall 51 mit dem gasgefüllten Überspannungsableiter 46 verbunden. Eine Erwärmung eines Varistors überträgt sich so auf die Sicherungen, so dass der aus einem niedrig schmelzenden Material bestehende Schmelzleiter thermisch zerstört wird. Im Kurzschlussfall wird der Schmelzleiter durch den dann fließenden Kurzschlussstrom zerstört, so dass in beiden Fällen der zugeordnete Varistor elektrisch vom Stromkreis abtrennt wird.

Um das metallische Gehäuse mit Bezugspotential (PE) verbinden zu können, weist die Gehäusehälfte 7 gemäß Fig. 1 und 2 als zweiten Anschluss 3 einen Befestigungsbereich 52 auf, mit dem die Gehäusehälfte 7 an einer Montageplatte befestigt werden kann. An der Unterseite des Befestigungsbereichs 52 ist eine Vertiefung 53 in der Gehäusehälfte 7 ausgebildet, mit der eine eventuell vorhandene Tragschiene überbaut werden kann. Mit Hilfe von in den Befestigungsnuten 54 eingesetzten Schrauben kann das Gehäuse dann sicher befestigt werden, wobei gleichzeitig eine elektrische Verbindung der Gehäusehälfte 7 mit der Montageplatte erfolgt. Zusätzlich ist seitlich an der Gehäusehälfte 7 noch ein Schutzleiteranschluss 55 als zweiten Anschluss 3 ausgebildet, über den ein Schutzleiter mit dem Gehäuse elektrisch verbunden werden kann. Der Schutzleiteranschluss 55 weist hierzu eine Aufnahmenut 56 auf, in die zum Anschluss eines mit einem Schutzleiter verbundenen Ringkabelschuhs eine Schraube verdrehsicher eingeschoben und gegen die Seitenwand der Gehäusehälfte 7 gepresst werden kann. Auch bei dem Ausführungsbeispiel gemäß den Fig. 5 und 6 kann als zweiter Anschluss 3 ein entsprechender Befestigungsbereich und vorzugsweise auch ein Schutzleiteranschluss ausgebildet sein.

Bei dem Ausführungsbeispiel gemäß den Fig. 1 und 2 ist an der Oberseite der Gehäusehälfte 7 eine Hochstromdurchführungsklemme 57 als erster Anschluss 2 befestigt, über die das Potential eines aktiven Leiters isoliert und hochstromtragfähig in das Gehäuseinnere geführt wird. Ein Isloierteil 58 erhöht die Luft- und Kriechstrecken in diesem Bereich zusätzlich und dient gleichzeitig als Drehmomentenstütze beim Anschließen der Leiter. Über einen Anschlusswinkel 59 sind die beiden Anschlüsse der Hochstromdurchführungsklemme 57 mit dem ersten Anschluss 47 des gasgefüllten Überspannungsableiters 46 elektrisch verbunden. Die Anschlüsse der Hochstromdurchführungsklemme 57 kann dadurch als Parallelschaltung verdrahtet werden.

Aus den Fig. 1 und 2 ist darüber hinaus noch entnehmbar, dass innerhalb des Gehäuses ein zumindest die Varistoren 4, 5, den Abschnitt 14 der Mittenelektrode 6 und die Kurzschlussschalter umgebendes zweiteiliges Innengehäuse ausgebildet ist, das aus einem mit der ersten Gehäusehälfte 7 verbundenen ersten Gehäuseteil 60 und einem mit dem Deckel 8 verbundenen zweiten Gehäuseteil 61 besteht. Um eine vollständige Abdichtung des Innengehäuses zu erreichen, ist in eine Nut in dem ersten Gehäuseteil 60 eine Dichtschnur 62 eingelegt und auf der Mittenelektrode 6 eine isolierende Durchführung 63 aufgeschoben, durch die die Mittenelektrode 6 in das Innengehäuse eingeführt und damit gegenüber dem Gehäuse isoliert ist.

Fig. 7 zeigt ein Ausführungsbeispiel eine Anzeigeeinrichtung zur Anzeige des Zustandes der Varistoren 4, 5, die sowohl eine optische Anzeige am Gehäuse als auch eine fernübertragbare Zustandsanzeige ermöglicht. Die Anzeigeeinrichtung weist eine Leiterplatte 64 auf, die mit einer Grundleiste eines aus dem Gehäuse herausgeführten Steckers 65 verbunden ist. Über den Stecker 65 wird die örtliche optische Anzeigeeinrichtung mit einer Hilfsenergie betrieben. Auf der Leiterplatte 64 befindet sich eine im Normalzustand leuchtende grüne LED 66 und eine im Normalzustand nicht leuchtende rote LED 67. Außerdem sind mehrere Temperatursicherungen 68 vorgesehen, die einerseits mit der Leiterplatte 64 verbunden sind und andererseits über den Temperatursicherungshalter 69, der an der Mittenelektrode 6 befestigt ist, in gutem thermischen Kontakt zur Mittenelektrode 6 stehen.

Erreicht die Temperatur der Mittenelektrode 6 eine erste vorgegebene Grenztemperatur, so löst die erste Temperatursicherung 68 aus, was dazu führt, dass die den fehlerfreien Zustand anzeigende grüne LED 66 erlischt. Gleichzeitig beginnt die rote LED 67 zu leuchten, wodurch ein Fehlerfall angezeigt wird. Über einen Lichtleiter 70 wird das Licht der LEDs 66, 67 zu einem Anzeigefenster in der Oberseite der Gehäusehälfte 7 geleitet. Eine zweite Temperatursicherung 68 ist als fernübertragbare Funktionsanzeige über den Stecker 65 abfragbar. Über die dritte Temperatursicherung 68, die in ihrer Auslösetemperatur auf das Schalten des Kurzschlussschalters abgestimmt ist, kann das Erreichen der Schalttemperatur des Kurzschlussschalters abgefragt werden.

## Patentansprüche

1. Überspannungsschutzelement mit einem Gehäuse, mit Anschlüssen (2, 3) zum elektrischen Anschluss des Überspannungsschutzelements (1) an den zu schützenden Strom- oder Signalpfad, mit zwei im Inneren des Gehäuses angeordneten und elektrisch parallel geschalteten Varistoren (4, 5) und mit einer zumindest teilweise zwischen den Varistoren (4, 5) angeordneten Mittenelektrode (6), wobei das Gehäuse zwei aus Metall bestehende, elektrisch miteinander verbundene Gehäusehälften (7, 8) aufweist, wobei die Mittenelektrode (6) gegenüber den Gehäusehälften (7, 8) isoliert ist und mit ihren einander gegenüberliegenden Seiten jeweils elektrisch mit einem ersten Anschlussbereich (9,) eines Varistors (4, 5) verbunden ist, und wobei die beiden Varistoren (4, 5) und die Mittenelektrode (6) sandwichartig zwischen den beiden Gehäusehälften (7, 8) angeordnet sind,
**dadurch gekennzeichnet,**
**dass** ein weiterer Ableiter (46), insbesondere ein gasgefüllter Überspannungsableiter, zwischen einem Anschluss (2, 3) des Überspannungsschutzelements (1) und der Parallelschaltung der beiden Varistoren (4, 5) angeordnet ist.

2. Überspannungsschutzelement nach Anspruch 1, **dadurch gekennzeichnet, dass** die beiden Gehäusehälften (7, 8) jeweils elektrisch mit einem zweiten Anschlussbereich (15) eines Varistors (4, 5) verbunden sind, und dass der erste Anschluss (47) des weiteren Ableiters (46) mit dem ersten Anschluss (2) zum Anschluss mindestens eines aktiven Leiters (L) des zu schützenden Strom- oder Signalpfads und der zweite Anschluss (48) des weiteren Ableiters (46) mit der Mittenelektrode (6) elektrisch leitend verbunden ist.

3. Überspannungsschutzelement nach Anspruch 2, **dadurch gekennzeichnet, dass** im Bereich des weiteren Ableiters (46) eine Isolation (49) im Gehäuse angeordnet ist, die zumindest den weiteren Ableiter (46) und den Verbindungsbereich des ersten Anschlusses (47) des weiteren Ableiters (46) mit einem ersten Anschluss (2) des Überspannungsschutzelements (1) gegenüber dem Gehäuse zusätzlich isoliert.

4. Überspannungsschutzelement nach Anspruch 1, **dadurch gekennzeichnet, dass** die Mittenelektrode (6) mit einem ersten Anschluss (2) zum Anschluss mindestens eines aktiven Leiters (L) des zu schützenden Strom- oder Signalpfads verbunden ist, dass zwisehen den beiden Gehäusehälften (7, 8) und den zugewandten zweiten Anschlussbereichen (15) der beiden Varistoren (4, 5) jeweils ein Verbindungsmetall (32) angeordnet ist, wobei die Verbindungsmetalle (32) jeweils durch ein Isolationselement (33) von den Gehäusehälften (7, 8) isoliert sind, und dass der erste Anschluss (47) des weiteren Ableiters (46) mit dem Gehäuse und der zweite Anschluss (48) des weiteren Ableiters (46) mit den beiden Verbindungsmetallen (32) direkt oder indirekt verbunden ist.

5. Überspannungsschutzelement nach Anspruch 4, **dadurch gekennzeichnet, dass** zwischen dem zweiten Anschluss (48) des weiteren Ableiters (46) und den beiden Verbindungsmetallen (32) jeweils eine Vorsicherung (43), insbesondere einer Schmelzsicherung angeordnet ist, und dass die Verbindungsmetalle (32) jeweils einen zweiten Kontaktabschnitt (44) aufweisen, der jeweils mit einem ersten Anschluss (45) einer Vorsicherung (43) elektrisch leitend verbunden ist.

6. Überspannungsschutzelement nach einem der Ansprüche 1 bis 5, **dadurch gekennzeichnet, dass** das Gehäuse einen Schutzleiteranschluss (55) als zweiten Anschluss (3) aufweist, über den ein Schutzleiter mit dem Gehäuse elektrisch verbindbar ist, wobei der Schutzleiteranschluss (55) vorzugsweise an der ersten Gehäusehälfte (7) angeordnet ist und eine Aufnahmenut (56) aufweist.

7. Überspannungsschutzelement nach einem der Ansprüche 1 bis 6, **dadurch gekennzeichnet, dass** innerhalb des Gehäuses eine zumindest die Varistoren (4, 5) und ggf. auch den oder die temperaturabhängigen Kurzschlussschalter umgebendes Innengehäuse ausgebildet ist, wobei das Innengehäuse zweiteilig ausgebildet ist und aus einem mit der ersten Gehäusehälfte (7) verbundenen ersten Gehäuseteil (60) und einem mit der zweiten Gehäusehälfte (8) verbundenen zweiten Gehäuseteil (61) besteht, wobei das Innengehäuse vorzugsweise noch mindestens ein Dichtelement (62, 63) aufweist.

8. Überspannungsschutzelement nach einem der Ansprüche 1 bis 7, **dadurch gekennzeichnet, dass** eine optische Anzeigeeinrichtung und/oder eine fernübertragbare Anzeigeeinrichtung zur Anzeige des Zustandes der Varistoren (4, 5) am Gehäuse ausgebildet bzw. angeordnet ist.

9. Überspannungsschutzelement nach einem der Ansprüche 1 bis 8, **dadurch gekennzeichnet, dass** die eine Gehäusehälfte (8) als Deckel ausgebildet ist, der einen Deckabschnitt (10) und einen zurückspringenden Eingriffsabschnitt (11) aufweist, wobei im verbundenen Zustand der beiden Gehäusehälften (7, 8) der Eingriffsabschnitt (11) in den von der anderen Gehäusehälfte (7) gebildeten korrespondierenden Aufnahmeraum (12) eingreift und der Deckabschnitt (10) den Aufnahmeraum (12) überdeckt,
dass die beiden Gehäusehälften (7, 8) derart ausgebildet und miteinander verbindbar sind, dass im verbundenen Zustand zwischen den beiden Gehäusehälften (7, 8) eine Sichtfuge (13) vorhanden ist,
wobei die Breite (B) der Sichtfuge (13) in Abhängigkeit von der Dicke der beiden Varistoren (4, 5) variiert, die maximale Breite (B) der Sichtfuge (13) jedoch kleiner als die korrespondierende Erstreckung des Eingriffsabschnitts (11) der als Deckel ausgebildeten Gehäusehälfte (8) ist.

10. Überspannungsschutzelement nach Anspruch 9, **dadurch gekennzeichnet, dass** die Mittenelektrode (6) einen flächigen Abschnitt (14) aufweist, dessen Abmessungen im wesentlichen den Abmessungen der Varistoren (4, 5) entspricht, und dass die Anschlussbereiche (9) der Varistoren (4, 5) jeweils eine Seite der Mittenelektrode (6) flächig kontaktieren.

11. Überspannungsschutzelement nach Anspruch 9 oder 10, **dadurch gekennzeichnet, dass** die Mittenelektrode (6) aus zwei parallel zueinander angeordneten und elektrisch miteinander verbundenen Metallteilen (6a, 6b) besteht, wobei die beiden Metallteile (6a, 6b) zumindest im Bereich zwischen den beiden Varistoren (4, 5) einen Abstand voneinander aufweisen, in dem vorzugsweise ein Federelement (17) derart angeordnet ist, dass die beiden Metallteile (6a, 6b) mit ihren einander abgewandten Seiten jeweils gegen einen Anschlussbereich (9) eines Varistors (4, 5) gedrückt werden.

12. Überspannungsschutzelement nach einem der Ansprüche 1 bis 10, **dadurch gekennzeichnet, dass** mindestens eine Sicherung mit einem Schmelzleiter derart innerhalb des Gehäuses angeordnet und mit den Varistoren (4, 5) elektrisch leitend verbunden ist, dass die Sicherung sowohl bei Erreichen einer vorgegebenen Grenztemperatur aufgrund einer übermäßigen Erwärmung mindestens eines Varistors (4, 5) als auch beim Auftreten eines Kurschlusses auslöst und damit die Varistoren (4, 5) elektrisch vom Stromkreis abtrennt, wobei die Sicherung vorzugsweise einen Schmelzleiter aus einem niedrig schmelzenden Material, beispielsweise Zinn, und vorzugsweise eine Löschhilfe, beispielsweise Sand, aufweist.

## Claims

1. Overvoltage protection element with a housing, with terminals (2, 3) for electrical connection of the overvoltage protection element (1) to the current path or signal path to be protected, with two varistors (4, 5) which are connected electrically in parallel and which are located within the housing, and with a middle electrode (6) located at least partially between the varistors (4, 5), wherein the housing having two metal housing halves (7, 8) which are electrically connected to one another, wherein the middle electrode (6) is insulated relative to the housing halves (7, 8) and connected with its opposite sides electrically to a first connecting region (9) of each varistor (4, 5), and wherein the two varistors (4, 5) and the middle electrode (6) are located sandwiched between the two housing halves (7, 8),
**characterized in,**
**that** there is arranged another arrester (46), especially a gas-filled surge arrester, between one terminal (2, 3) of the overvoltage protection element (1) and the parallel connection of the two varistors (4, 5).

2. Overvoltage protection element as claimed in Claim 1, **characterized in that** the two housing halves (7, 8) are each electrically connected to the second connecting region (15) of a varistor (4, 5), and wherein the first terminal (47) of the other arrester (46) is connected in an electrically conductive manner to the first terminal (2) for connecting at least one active conductor (L) of the current path or signal path to be protected and the second terminal (48) of the other arrester (46) is connected in an electrically conductive manner to the middle electrode (6).

3. Overvoltage protection element as claimed in Claim 2, **characterized in that** in the region of the other arrester (46) there is an insulation (49) arranged in the housing which additionally insulates at least the other arrester (46) and the connecting region of the first terminal (47) of the other arrester (46) to a first terminal (2) of the overvoltage protection element (1) relative to the housing.

4. Overvoltage protection element according to claim 1, **characterized in that** the middle electrode (6) is connected to a first terminal (2) for connecting at least one active conductor (L) of the current path or signal path to be protected, wherein there is a connecting metal (32) at a time between the two housing halves (7, 8) and the facing second connecting regions (15) of the two varistors (4, 5), wherein the connecting metals (32) each being insulated from the housing halves (7, 8) by an insulating element (33), and wherein the first terminal (47) of the other arrester (46) is connected directly or indirectly to the housing and the second terminal (48) of the other arrester (46) is connected directly or indirectly to the two connecting metals (32).

5. Overvoltage protection element according to claim 4, **characterized in that** a back-use fuse (43), especially of a fusible, is arranged between the second terminal (48) of the other arrester (46) and the two connecting metals (32) and wherein the connecting metals (32) each having a second contact section (44) at a time which is connected in an electrically conductive manner to the first terminal (45) of a back-up fuse (43).

6. Overvoltage protection element according to any one of claims 1 to 5, **characterized in that** the housing has a protective conductor terminal (55) as the second terminal (3) via which one protective conductor can be electrically connected to the housing, the protective conductor terminal (55) being located preferably at the first housing half (7) and having a receiving groove (56).

7. Overvoltage protection element according to any one of claims 1 to 6, **characterized in that** within the housing an inner housing is formed which surrounds at least the varistors (4, 5) and optionally also the temperature-dependent short-circuit switch or switches, wherein the inner housing is made in two parts and consists of a first housing part (60) which is connected to the first housing half (7) and a second housing part (61) which is connected to the second housing half (8), wherein the inner housing having preferably at least one sealing element (62, 63).

8. Overvoltage protection element according to any one of claims 1 to 7, **characterized in that** an optical display device and/or a remote display device are made or arranged at the housing for display of the state of the varistors (4, 5).

9. Overvoltage protection element according to any one of claims 1 to 8, **characterized in that** one housing half (8) is made as a cover which has a covering section (10) and an recessed engagement section (11), wherein in the connected state of the two housing halves (7, 8) the engagement section (11) engaging the corresponding receiving space (12) formed by the other housing half (7) and the covering section (10) covering the receiving space (12),
that the two housing halves (7, 8) are made and can be connected to one another such that in the connected state there is a viewing gap (13) between the two housing halves (7,8)
wherein the width (B) of the viewing gap (13) varying depending on the thickness of the two varistors (4, 5), the maximum width (B) of the viewing gap (13) being however always smaller than the corresponding extension of the engagement section (11) of the second housing half (8) which is made as a cover.

10. Overvoltage protection element according to claim 9, **characterized in that** the middle electrode (6) has a flat section (14) whose dimensions correspond essentially to the dimensions of the varistors (4, 5), and wherein the connecting regions (9) of the two varistors (4, 5) each make flat contact with one side of the middle electrode (6) at a time.

11. Overvoltage protection element according to claim 9 or 10, **characterized in that** the middle electrode (6) consists of two metal parts (6a, 6b) which are electrically connected to one another and which are arranged parallel to one another, wherein the two metal parts (6a, 6b) having a distance from one another at least in the region between the two varistors (4, 5), a spring element (17) is preferably arranged in the distance such that the two metal parts (6a, 6b) with their sides facing away from one another are each pressed against a connecting region (9) of a varistor (4, 5).

12. Overvoltage protection element according to any one of claims 1 to 10, **characterized in that** at least one fuse with a fusible element is located within the housing and is connected in an electrically conductive manner to the varistors (4, 5) such that the fuse triggers and thus separates the varistors (4, 5) electrically from the circuit, when a given boundary temperature is reached due to an excess heating of at least one varistor (4, 5) and also when a short circuit occurs, wherein the fuse preferably has a fusible element of a low-melting material, for example tin, and preferably an extinguishing aid, for example sand.

## Revendications

1. Élément de protection contre les surtensions comportant un boîtier, des bornes (2, 3) pour le raccordement électrique de l'élément de protection contre les surtensions (1) au trajet de courant ou de signal à protéger, deux varistances (4, 5) disposées à l'intérieur du boîtier et connectées électriquement en parallèle et une électrode centrale (6) disposée au moins en partie entre les varistances (4, 5), dans lequel le boîtier comporte deux moitiés de boîtier (7, 8) en métal reliées électriquement l'une à l'autre, dans lequel l'électrode centrale (6) est isolée des moitiés de boîtier (7, 8) et est reliée électriquement par ses faces opposées à une première région de raccordement (9) d'une varistance (4, 5), et dans lequel les deux varistances (4, 5) et l'électrode centrale (6) sont prises en sandwich entre les deux moitiés de boîtier (7, 8),
**caractérisé**
**en ce qu'**un autre parafoudre (46), en particulier un parasurtenseur rempli de gaz, est disposé entre une borne (2, 3) de l'élément de protection contre les surtensions (1) et la connexion en parallèle des deux varistances (4, 5).

2. Élément de protection contre les surtensions selon la revendication 1, **caractérisé en ce que** les deux moitiés de boîtier (7, 8) sont respectivement reliées électriquement à une deuxième région de raccordement (15) d'une varistance (4, 5), et **en ce que** la première borne (47) de l'autre parafoudre (46) est reliée de manière électriquement conductrice à la première borne (2) pour le raccordement d'au moins un conducteur vif (L) du trajet de courant ou de signal à protéger et la deuxième borne (48) de l'autre parafoudre (46) est reliée de manière électriquement conductrice à l'électrode centrale (6).

3. Élément de protection contre les surtensions selon la revendication 2, **caractérisé en ce qu'**une isolation (49) est disposée dans le boîtier dans la région de l'autre parafoudre (46), laquelle isolation isole en outre du boîtier au moins l'autre parafoudre (46) et la région de raccordement de la première borne (47) de l'autre parafoudre (46) au moyen d'une première borne (2) de l'élément de protection contre les surtensions (1).

4. Élément de protection contre les surtensions selon la revendication 1, **caractérisé en ce que** l'électrode centrale (6) est reliée à une première borne (2) pour le raccordement d'au moins un conducteur vif (L) du trajet de courant ou de signal à protéger, **en ce qu'**un métal de liaison (32) est respectivement disposé entre les deux moitiés de boîtier (7, 8) et les deuxièmes régions de raccordement (15) mutuellement opposées des deux varistances (4, 5), dans lequel les métaux de liaison (32) sont respectivement isolés des moitiés de boîtier (7, 8) par un élément d'isolation (33), et **en ce que** la première borne (47) de l'autre parafoudre (46) est reliée directement ou indirectement au boîtier et la deuxième borne (48) de l'autre parafoudre (46) est reliée directement ou indirectement aux deux métaux de liaison (32).

5. Élément de protection contre les surtensions selon la revendication 4, **caractérisé en ce qu'**un dispositif de protection amont (43), en particulier un fusible, est respectivement disposé entre la deuxième borne (48) de l'autre parafoudre (46) et les deux métaux de liaison (32), et **en ce que** les métaux de liaison (32) présentent chacun une deuxième section de contact (44) qui est respectivement reliée de manière électriquement conductrice à une première borne (45) d'un dispositif de protection amont (43).

6. Élément de protection contre les surtensions selon l'une des revendications 1 à 5, **caractérisé en ce que** le boîtier comporte une borne de conducteur de protection (55) en tant que deuxième borne (3), par l'intermédiaire de laquelle un conducteur de protection peut être relié électriquement au boîtier, dans lequel la borne de conducteur de protection (55) est de préférence disposée sur la première moitié de boîtier (7) et présente une rainure de réception (56).

7. Élément de protection contre les surtensions selon l'une des revendications 1 à 6, **caractérisé en ce qu'**un boîtier interne entourant au moins les varistances (4, 5) et éventuellement aussi le ou les interrupteurs de court-circuit dépendant de la température est réalisé à l'intérieur du boîtier, dans lequel le boîtier interne est réalisé en deux parties et se compose d'une première partie de boîtier (60) reliée à la première moitié de boîtier (7) et d'une deuxième partie de boîtier (61) reliée à la deuxième moitié de boîtier (8), dans lequel le boîtier interne présente également de préférence au moins un élément d'étanchéité (62, 63).

8. Élément de protection contre les surtensions selon l'une des revendications 1 à 7, **caractérisé en ce qu'**un dispositif d'affichage optique et/ou un dispositif d'affichage transférable à distance est réalisé ou disposé sur le boîtier pour afficher l'état des varistances (4, 5).

9. Élément de protection contre les surtensions selon l'une des revendications 1 à 8, **caractérisé en ce que** la moitié de boîtier (8) est réalisée sous la forme d'un couvercle ayant une partie de couvercle (10) et une partie d'engagement en retrait (11), dans lequel, dans l'état relié des deux moitiés de boîtier (7, 8), la partie d'engagement (11) s'engage dans l'espace de réception correspondant (12) formé par l'autre moitié de boîtier (7) et la partie de couvercle (10) recouvre l'espace de réception (12),
**en ce que** les deux moitiés de boîtier (7, 8) sont réalisées et peuvent être reliées l'une à l'autre de telle manière qu'à l'état relié, un joint visible (13) soit prévu entre les deux moitiés de boîtier (7, 8),
dans lequel la largeur (B) du joint visible (13) varie en fonction de l'épaisseur des deux varistances (4, 5), mais la largeur (B) maximale du joint visible (13) est plus petite que l'extension correspondante de la partie d'engagement (11) de la moitié de boîtier (8) réalisée sous forme de couvercle.

10. Élément de protection contre les surtensions selon la revendication 9, **caractérisé en ce que** l'électrode centrale (6) présente une partie plane (14) dont les dimensions correspondent sensiblement aux dimensions des varistances (4, 5), et **en ce que** les régions de raccordement (9) des varistances (4, 5) sont en contact plan avec une face de l'électrode centrale (6).

11. Élément de protection contre les surtensions selon la revendication 9 ou 10, **caractérisé en ce que** l'électrode centrale (6) est constituée de deux parties métalliques (6a, 6b) disposées parallèlement l'une à l'autre et reliées électriquement l'une à l'autre, dans lequel les deux parties métalliques (6a, 6b) présentent au moins dans la région située entre les deux varistances (4, 5) un espacement dans lequel un élément à ressort (17) est disposé de préférence de telle manière que les deux parties métalliques (6a, 6b) soient respectivement comprimées par leurs faces tournées à l'opposé l'une de l'autre contre une région de raccordement (9) d'une varistance (4, 5).

12. Élément de protection contre les surtensions selon l'une des revendications 1 à 10, **caractérisé en ce qu'**au moins un dispositif de protection comportant un conducteur fusible est disposé à l'intérieur du boîtier et est relié de manière électriquement conductrice aux varistances (4, 5), **en ce que** le dispositif de protection se déclenche aussi bien lorsqu'une température limite prédéterminée est atteinte par échauffement excessif d'au moins une varistance (4, 5) qu'en cas d'apparition d'un court-circuit et sépare ainsi électriquement les varistances (4, 5) du circuit, dans lequel le dispositif de protection comporte de préférence un conducteur fusible constitué d'un matériau à bas point de fusion, par exemple de l'étain, et de préférence un adjuvant d'extinction, par exemple du sable.
